# EUROPEAN PATENT APPLICATION

(11) **EP 1 480 218 A1**
(43) Date of publication of application: **24.11.2004**
(21) Application number: 03101491.3
(22) Date of filing: 23.05.2003
(51) Int. Cl.: G11B 27/034, G11B 27/32

(54) **Rewritable record carrier**

(71) Applicant: Koninklijke Philips Electronics N.V., 5621 BA Eindhoven (NL)
(72) Inventor: The designation of the inventor has not yet been filed
(74) Representative: Mak, Theodorus Nicolaas

(57) **Abstract**

Rewritable record carrier of a predetermined format storing one or more directories of user data in a predetermined data format. In particular, the storage of DVD-Video data on a Mount Rainier formatted optical disc, such as a DVD+RW disc. In order to enable a consumer player to play back video data which has been written to the record carrier in said predetermined format it is proposed that the record carrier comprises a convergence directory (VIDEO_TS) including a title set (VTS) for each directory of user data stored on said record carrier, each title set comprising a title set information file (vts_xy.ifo) and one or more object files (vts_xy.vob), said title set information file (vts_xy.ifo) including content and address information of said one or more object files (vts_xy.vob) which comprise address information of said used data, and management information (VMG) comprising a management information file (video_ts.ifo) comprising address information of said title set information files (vts_xy.ifo).

## Description

The present invention relates to a rewritable record carrier of a predetermined format, such as Mount Rainier, storing one or more directories of user data, such as DVD-Video data, in a predetermined data format. Further, the present invention relates to a recording apparatus and a corresponding recording method for recording one or more directories of user data of a predetermined data format on such a rewritable record carrier. Still further, the present invention relates to a reproduction apparatus and a corresponding reproduction method for reproducing user data stored on such a rewritable record carrier. Moreover, the present invention relates to a computer program for implementing said recording method or said reproduction method on a computer.

Writing user data, for instance by use of a so-called drag & drop function, on rewritable record carriers, such as CD-RW, DVD-RW or DVD+RW discs, is currently not supported by any operating system of a computer (PC). The functionality is so far handled by special applications, that need to be installed on the PC running the drive. The discs that are written this way are not automatically readable by other disc drives, but require a proprietary read driver. New rewritable discs need to be formatted before data files can be written to them. This still takes too long and is difficult for the end user, keeping in mind the format choices required.

To overcome the above mentioned shortcomings, the Mount Rainier format has been developed which is for instance described on the www.microsoft.com site (http://www.microsoft.com/hwdev/tech/stream/DVD/DVDRW support. asp ). It enables native OS support of the drives and allows a consumer disc player to be used as a drag & drop device of choice. In addition, compatibility and performance is increased.

In order to store video data, in particular being in DVD-Video data format, on a rewritable record carrier, the format of preference will be Mount Rainier format, in particular when a user uses a DVD+RW disc in a PC platform. Because Mount Rainier format implies defect management in the drive and not at the application level, special measures have to be taken to make the data DVD-Video compliant. Once a user's PC is Mount Rainier enabled, a user is free to drag & drop entire directories of user data, such as video_ts-directories of DVD-Video data, for instance taken from a DVD-ROM, to the Mount Rainier formatted optical disc. These directories can be played back on the PC by any DVD playback program which can play back from a folder. However, it is not possible to play back these data on a consumer player. One main reason is that the DVD-Video files are to be located in places described in the video_ts.ifo file. If, during a drag & drop - action, no special measures are taken to adhere to the locations required in that file, there is a very large chance that the files will not have the proper start addresses. Another important reason is that the DVD standard requires that the video is contained in a single directory in the root, called VIDEO_TS.

It is therefore an object of the present invention to enable a consumer disc player to play back user data which has been written to a rewritable record carrier of a predetermined format. More particularly, it is the object of the present invention to provide a solution how to record DVD-Video data on a rewritable record carrier of Mount Rainier format such that the DVD-Video data can be played back on a standard consumer DVD player.

To this end, according to the present invention a rewritable record carrier of a predetermined format storing one or more directories of user data in a predetermined data format is provided, said record carrier comprising a convergence directory including a title set for each directory of user data stored on said record carrier, each title set comprising a title set information file and one or more object files, said title set information file including content and address information of said one or more object files which comprise address information of said user data, and management information comprising a management information file comprising address information of said title set information files.

Furthermore, a recording apparatus according to the present invention is provided for recording one or more directories of user data on a rewritable record carrier of a predetermined data format, said recording apparatus comprising
- a data recording means for storing said user data on said record carrier and
- a control means for control of said data recording means such that a convergence directory is generated on said record carrier including a title set for each directory of user data stored on said record carrier, each title set comprising a title set information file and one or more object files, said title set information file including content and address information of said one or more object files which comprise address information of said user data, and management information comprising a management information file comprising address information of said title set information files.

Also a recording method, a computer program for implementing said method on a computer, and a data reproduction apparatus are provided. Preferred embodiments of the invention are defined in the dependent claims.

The invention is based on the idea to create a special so-called convergence directory on the rewritable record carrier when writing user data to it. This directory contains all of the user data on the disc and can be viewed when the disc is in a first mode using said predetermined format of the record carrier (Mount Rainier mode), i.e. when the disc is played back via consumer player, as well as in a second mode using said predetermined data format of said user data (DVD-Video mode), i.e. when the disc is played back by a drive of a PC. The convergence directory is therefore the convergence of user data between the data standard (Mount Rainier) and the consumer standard (DVD-Video).

The convergence directory is created by the recording apparatus, in particular the drive in the PC, when the user data is written to the disc and before the disc is ejected. Therefore, a special application is run before the disc is ejected. Accordingly, a reproduction apparatus, such as a consumer player, comprises appropriate reading means for accessing said convergence directory and for evaluating the data stored therein.

While conventionally for each part of user data (e.g. each video) directories exist each comprising its own title set, according to the present invention all title sets are stored in a single common convergence directory so that there only exists a single access point to the playback device. In addition, management information is stored in the convergence directory which includes links to the title set information files of the different title sets. The title set information files have been thus been generated that convergence directory and that the object files comprise pointers to user data, which are preferably also in the form of object files, in another directory. Hence. The title set information files have only one pointer to it while the object files containing the user data have two pointers to it.

As already mentioned the present invention is preferably directed to record carriers which are formatted in Mount Rainier format and which are preferably used for the storage of video data in DVD-Video data format. These video data are originally, i.e. for instance on a DVD-ROM or on the hard disc of a PC, stored in separate directories which can now easily be dragged and dropped on the rewritable record carrier. However, the invention can also be applied to non-Mount Rainier formatted discs.

Besides the management information file comprising links to the title set information files of the title sets for each directory, the management information further comprises a management object file including motion video data and menu data. The title set information files have to be recreated on the basis of the information in the respective directory and the actual location of the object files. It is not possible to link to those files due to the location information in them.

To allow an easy access for the consumer player the convergence directory is preferably stored in the root of the record carrier.

Moreover, it is preferred, especially for DVD-Video, that the convergence directory is stated in a UDF file system as a VIDEO_TS directory.

The invention will now be explained in more detail with reference to the drawings in which:
Fig. 1 shows a simple block diagram of a recording and reproduction apparatus according to the invention,
Fig. 2 shows a logical view of the convergence directory and
Fig. 3 shows a logical view of a conventional storage (Fig. 3a) of object files and of a storage according to the invention in the convergence directory (Fig. 3b).

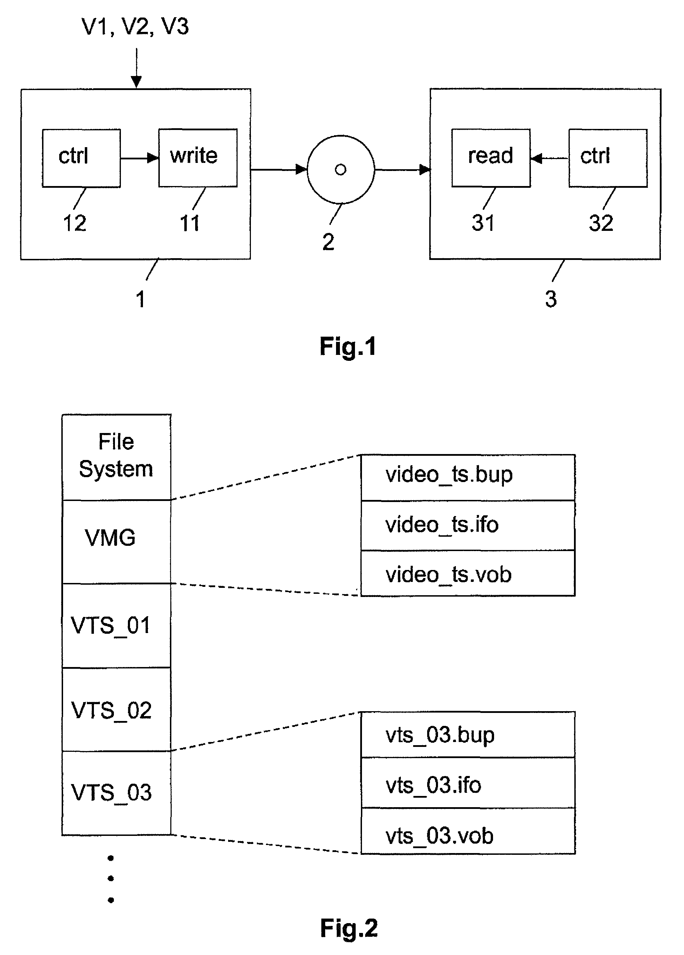

Fig. 1 illustrates the object and the solution according to the present invention. Shown is a recording apparatus 1 for recording user data on a rewritable record carrier 2 which can thereafter be read out and played back by a reproduction apparatus 3. The recording apparatus, can, for instance, be a PC which includes a drive for accessing optical discs, such as CDs or DVDs, and which is able to record data thereon. Therefore, an appropriate writing unit 11 and a control unit 12 for controlling the writing procedure. Similarly, the reproduction apparatus 3, which can, for instance, be a consumer player, such as DVD or CD player, comprises a reading unit 31 and a control unit 32 for controlling the reading procedure.

The present invention shall now be explained assuming that different videos V1, V2, V3 which are originally stored in different directories in DVD-Video format, shall be stored on the rewritable record carrier 2 which is formatted in Mount Rainier format, e.g. a DVD+RW disc, in such a way that it can be played back by a consumer playback apparatus, such as a DVD player 3. If a user would simply drag & drop the video files V1, V2, V3 to the disc 2, these files could be played back on the computer 1 but not on the consumer player 3 since DVD requires that there is only a single VIDEO_TS directory in the root. According to the invention the writing procedure in the computer 1 is adapted such that, even when writing more than one video file from different video directories are recorded, the disc 2 can be played back by the consumer player 3. The special application is thus run in the computer 1 before the disc 2 is ejected.

This application creates a special convergence directory, the so called VIDEO_TS directory in the Mount Rainier view. Each imported VIDEO_TS directory for the different video files V1, V2, V3 is then imported as a title set, i.e. a title or a group of titles (VTS). In addition, management information, a so-called video management group (VMG), is generated comprising a management information file (video_ts.ifo). This general structure of the convergence directory is shown logically in Fig. 2 on the left hand side. Shown is therein, besides the file system information, the management information VMG and three title sets VTS_01, VTS_02, VTS_03 which have been created for the three video files V1, V2, V3.

For each title set (VTS) a title set information file (vtx_xy.ifo) is created given the corresponding information file in the original directory. Further, each title set comprises one or more object files (vts_xy.vob) which comprise address information of the actual user data which are stored somewhere on the disc 2. This is also shown in Fig. 2 (on the right hand side). Besides the title set information file vts_03.ifo and an object file vts_03.vob each title set also a comprises a back-up file vts_03.bup which is a copy of the vts_03.ifo file.

The management information VMG comprises a management information file video_ts.ifo comprising address information of the title set information files vts_xy.ifo of the title sets VTS, i.e. links to said title set information files vts_xy.ifo. Further, it comprises a management object file video_ts.vob which includes motion video and menus. and a back-up file video_ts.bup which is a copy of the video_ts.ifo file.

The generated title set information files vts_xy.ifo will be placed at the proper position dictated in the VIDEO_TS.IFO file. The directory contains linked object files vts_xy.vob. The object files vts_xy.vob remain unchanged and the file contents are remapped. There is nothing in an object file vts_xy.vob which connects it to its file name. Hence, the fact that the file is referenced by another name in the convergence directory will not effect its legality. It should be mentioned that the VIDEO_TS.IFO file is correctly pointed to by a UDF file system in a DVD-Video application.

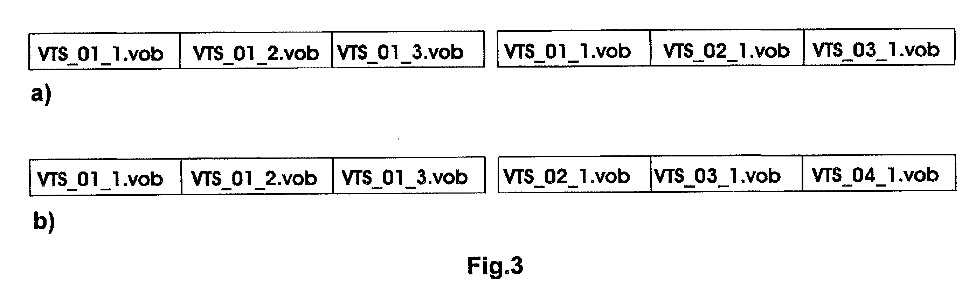

Fig. 3 shows a comparison between the names of object files as used conventionally (Fig. 3a) and as used in the convergence directory according to the present invention (Fig. 3b). Shown is, in the left part, a first video object vts_01.vob which comprises three sub-parts vts_01_1.vob, vts_01_2.vob, vts_01_3.vob which remain unchanged. However, three further video objects, for instance originally stored on a different disc as vts_01_1.vob, vts_02_1.vob and vts_03_1.vob need to be renamed when dragged & dropped on the same Mount Rainier disc into vts_02_1.vob, vts_03_1.vob and vts_04_1.vob.

Hence, according to the present invention the various videos remain intact and are now accessible to the user by a consumer player 3 as a single access point. The program which generates the management information file video_ts.ifo in the convergence directory has the freedom to choose how to present to the user the different merged titles. Because the convergence directory is also accessible to the user in Mount Rainier view, he can access tools to fit the default view to his own linking. Because the files in the convergence directory are shared, care has to be taken to remain consistency between the two file views.

While in the above the present invention has been explained using a particular example of Mount Rainier format and DVD-Video data, the invention is to be understood generally as using data in a predetermined data format and a rewritable record carrier formatted in a predetermined format. Moreover, the invention is not only applicable for storing video data, but can be applied for the storage of any user data. It is noted, that in this document the word 'comprising' does not exclude the presence of other elements or steps than those listed and the word 'a' or 'an' preceding an element does not exclude the presence of a plurality of such elements, that any reference signs do not limit the scope of the claims, that the invention may be implemented by means of both hardware and software, and that several 'means' or 'units' may be represented by the same item of hardware or software. Further, the scope of the invention is not limited to the embodiments, and the invention lies in each and every novel feature or combination of features described above.

## Claims

1. Rewritable record carrier of a predetermined format storing one or more directories of user data in a predetermined data format, said record carrier comprising a convergence directory (VIDEO_TS) including a title set (VTS) for each directory of user data stored on said record carrier, each title set comprising a title set information file (vts_xy.ifo) and one or more object files (vts_xy.vob), said title set information file (vts_xy.ifo) including content and address information of said one or more object files (vts_xy.vob) which comprise address information of said user data, and management information (VMG) comprising a management information file (video_ts.ifo) comprising address information of said title set information files (vts_xy.ifo).

2. Record carrier as claimed in claim 1, wherein said record carrier is formatted in Mount Rainier format.

3. Record carrier as claimed in claim 1, wherein said user data substantially comprise video data in DVD-Video data format

4. Record carrier as claimed in claim 3, wherein said one or more directories of user data are separate directories each storing video data in DVD-Video data format.

5. Record carrier as claimed in claim 1, wherein said management information (VMG) further comprises a management object file (video_ts.vob) including motion video data and menu data.

6. Record carrier as claimed in claim 1, wherein said convergence directory is stored in the root of said record carrier.

7. Record carrier as claimed in claim 1, wherein said convergence directory is stated in an UDF file system as a VIDEO_TS directory.

8. Recording apparatus for recording one or more directories of user data of a predetermined data format on a rewritable record carrier of a predetermined format, comprising
- a data recording means for storing said user data on said record carrier and
- a control means for control of said data recording means such that a convergence directory is generated on said record carrier including a title set (VTS) for each directory of user data stored on said record carrier, each title set comprising a title set information file (vts_xy.ifo) and one or more object files (vts_xy.vob), said title set information file (vts_xy.ifo) including content and address information of said one or more object files (vts_xy.vob) which comprise address information of said user data, and management information (VMG) comprising a management information file (video_ts.ifo) comprising address information of said title set information files (vts_xy.ifo).

9. Recording method for recording one or more directories of user data of a predetermined data format on a rewritable record carrier of a predetermined format, wherein said user data are stored on said record carrier, comprising the step of generating a convergence directory (VIDEO_TS) on said record carrier including a title set (VTS) for each directory of user data stored on said record carrier, each title set comprising a title set information file (vts_xy.ifo) and one or more object files (vts_xy.vob), said title set information file (vts_xy.ifo) including content and address information of said one or more object files (vts_xy.vob) which comprise address information of said user data, and management information (VMG) comprising a management information file (video_ts.ifo) comprising address information of said title set information files (vts_xy.ifo).

10. Computer program comprising computer program means for performing the steps of the recording method as claimed in claim 9 when said computer program is run on a computer.

11. Reproduction apparatus for reproducing one or more directories of user data of a predetermined data format from a rewritable record carrier of a predetermined format, comprising
- a data reading means for reading said user data from said record carrier and
- a control means for control of said data reading means such that a convergence directory is generated from said record carrier including
a title set (VTS) for each directory of user data stored on said record carrier, each title set comprising a title set information file (vts_xy.ifo) and one or more object files (vts_xy.vob), said title set information file (vts_xy.ifo) including content and address information of said one or more object files (vts_xy.vob) which comprise address information of said user data, and
management information (VMG) comprising a management information file (video_ts.ifo) comprising address information of said title set information files (vts_xy.ifo).
